# EUROPEAN PATENT APPLICATION

(11) **EP 4 390 181 A1**
(43) Date of publication of application: **26.06.2024**
(21) Application number: 22858328.2
(22) Date of filing: 04.08.2022
(51) Int. Cl.: F16H 49/00, H02K 7/10

(54) **MAGNETIC MODULATION GEAR AND GEAR MOTOR**

(30) Priority: 17.08.2021 JP 2021132953
(71) Applicant: Sumitomo Heavy Industries, Ltd., Tokyo 141-6025 (JP)
(72) Inventor: NAKAGAWA, Hiroki, Yokosuka-shi, Kanagawa 237-8555 (JP); YAMAMOTO, Taizo, Yokosuka-shi, Kanagawa 237-8555 (JP); MINARI, Takahiro, Yokosuka-shi, Kanagawa 237-8555 (JP)
(74) Representative: Louis Pöhlau Lohrentz
(86) International application number: PCT/JP2022/029944
(87) International publication number: WO 2023/022007

(57) **Abstract**

A magnetic modulation gear and a gear motor capable of suppressing a decrease in torque and efficiency caused by an eddy current are provided. A magnetic modulation gear (30) includes: a plurality of outer pole magnets (33) that are arranged in a circumferential direction; a plurality of magnetic pole pieces (32a) that are provided radially inward of the plurality of outer pole magnets and arranged in the circumferential direction; a plurality of inner pole magnets (31a) that are provided radially inward of the plurality of magnetic pole pieces and arranged in the circumferential direction. The magnetic modulation gear further includes a shaft member (32b) that is connected to the plurality of magnetic pole pieces (32a), the shaft member includes a non-conductive portion (32b2) and a conductive portion (32b1), and the conductive portion (32b1) is connected to the plurality of magnetic pole pieces (32a) via the non-conductive portion (32b2).

## Description

### Technical Field

The present invention relates to a magnetic modulation gear and a gear motor.

### Background Art

PTL 1 discloses a magnetic modulation gear including a plurality of outer pole magnets arranged in a circumferential direction, a plurality of inner pole magnets provided radially inward of the outer pole magnets and arranged in the circumferential direction, and a plurality of magnetic pole pieces provided between the outer pole magnets and the inner pole magnets and arranged in the circumferential direction. The plurality of magnetic pole pieces are held by a pole holder of a non-magnetic body integrated with a shaft.

### Citation List

### Patent Literature

[PTL 1] Japanese Unexamined Patent Publication No. 2020-133790

### Summary of Invention

### Technical Problem

The magnetic modulation gear of the related art described above has a problem in that a magnetic flux leaking in an axial direction from between the outer pole magnets and the inner pole magnets enters the vicinity of the pole holder of the shaft, resulting in the occurrence of an eddy current at that site. The occurrence of the eddy current leads to a decrease in torque and efficiency of the magnetic modulation gear.

An object of the present invention is to provide a magnetic modulation gear and a gear motor capable of suppressing a decrease in torque and efficiency caused by an eddy current.

### Solution to Problem

According to an aspect of the present invention, there is provided a magnetic modulation gear including: a plurality of outer pole magnets that are arranged in a circumferential direction; a plurality of magnetic pole pieces that are provided radially inward of the plurality of outer pole magnets and arranged in the circumferential direction; and a plurality of inner pole magnets that are provided radially inward of the plurality of magnetic pole pieces and arranged in the circumferential direction, in which the magnetic modulation gear further includes a shaft member that is connected to the plurality of magnetic pole pieces, the shaft member includes a non-conductive portion and a conductive portion, and the conductive portion is connected to the plurality of magnetic pole pieces via the non-conductive portion.

According to another aspect of the present invention, there is provided a magnetic modulation gear including: a plurality of outer pole magnets that are arranged in a circumferential direction; a plurality of magnetic pole pieces that are provided radially inward of the plurality of outer pole magnets and arranged in the circumferential direction; and a plurality of inner pole magnets that are provided radially inward of the plurality of magnetic pole pieces and arranged in the circumferential direction, in which no conductor is provided in a region between inner peripheral ends of the plurality of outer pole magnets and outer peripheral ends of the plurality of inner pole magnets in a radial direction and having a distance of less than 3 mm from the magnetic pole pieces in an axial direction.

According to still another aspect of the present invention, there is provided a gear motor including: an electric motor, and the above magnetic modulation gear that receives power from the electric motor.

### Advantageous Effects of Invention

According to the present invention, it is possible to obtain an effect of suppressing a decrease in torque and efficiency caused by an eddy current.

### Brief Description of Drawings

Fig. 1 is a cross-sectional view showing a magnetic modulation gear according to an embodiment of the present invention.
Fig. 2 is a perspective view showing a cross-section of the magnetic modulation gear of Fig. 1.
Fig. 3A is a graph showing a change in eddy current loss characteristics due to disposition of a conductor.
Fig. 3B is a graph showing a change in efficiency characteristics due to the disposition of the conductor.
Fig. 4A is a diagram showing first disposition of the conductor, which is an analysis condition of the characteristics.
Fig. 4B is a diagram showing second disposition of the conductor, which is an analysis condition of the characteristics.
Fig. 5 is a cross-sectional view showing a gear motor according to the embodiment of the present invention.
Fig. 6A is a view showing Modification Example 1 of a connection portion of a shaft member.
Fig. 6B is a view showing Modification Example 2 of the connection portion of the shaft member.
Fig. 6C is a view showing Modification Example 3 of the connection portion of the shaft member.
Fig. 7A is a view showing Modification Example 4 of a connection structure of the shaft member.
Fig. 7B is a view showing Modification Example 5 of the connection structure of the shaft member.
Fig. 7C is a view showing Modification Example 6 of the connection structure of the shaft member.
Fig. 8A is a view showing Modification Example 7 in which other conductive components are provided.
Fig. 8B is a view showing Modification Example 8 in which other conductive components are provided.

### Description of Embodiments

Hereinafter, each embodiment of the present invention will be described in detail with reference to the drawings.

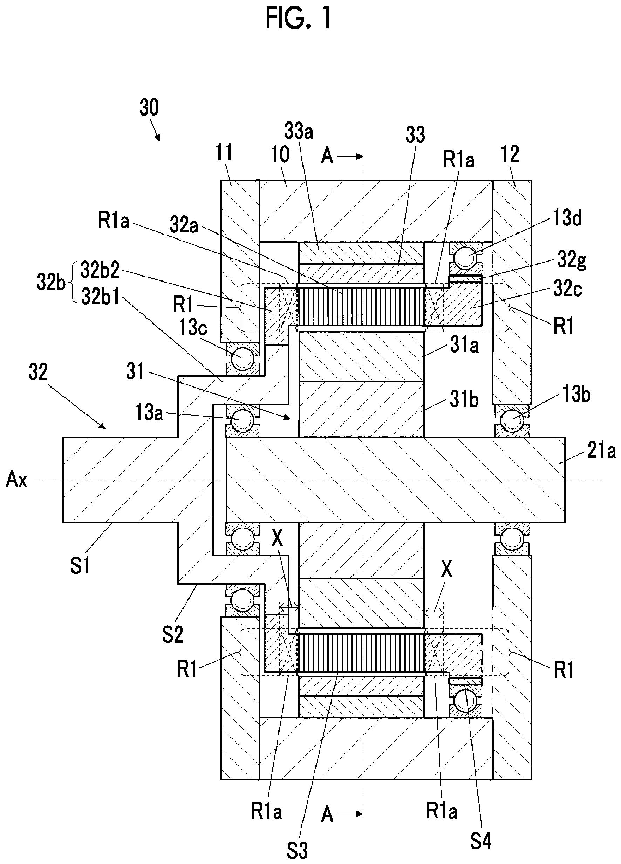

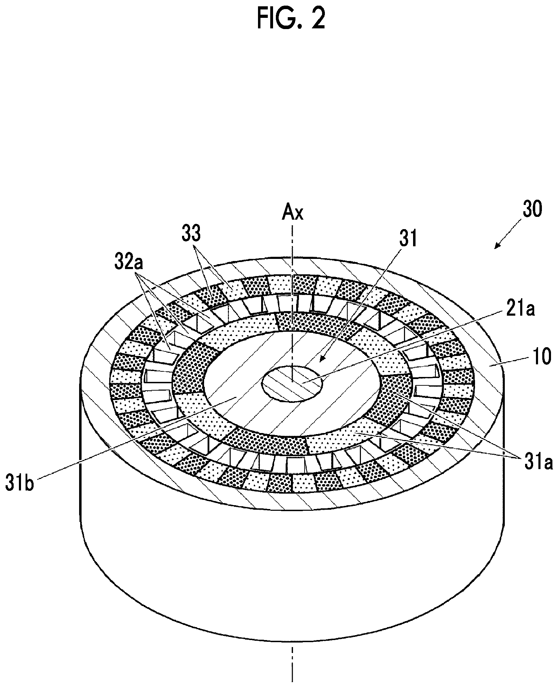

Fig. 1 is a cross-sectional view showing a magnetic modulation gear according to an embodiment of the present invention. Fig. 2 is a perspective view showing a cross-section of the magnetic modulation gear of Fig. 1. The cross-section of Fig. 2 shows a cross-section of Fig. 1 along line A-A. Hereinafter, a direction along a center axis Ax will be referred to as an axial direction, a direction perpendicular to the center axis Ax will be referred to as a radial direction, and a direction of rotating about the center axis Ax will be referred to as a circumferential direction. In addition, a side on which a shaft member 32b protrudes in the axial direction (a left side in the drawing) will be referred to as a load side, and an opposite side thereof (a right side in the drawing) will be referred to as a counter load side.

A magnetic modulation gear 30 includes a high-speed rotor 31, a low-speed rotor 32, a plurality of outer pole magnets 33, a casing 10, a load-side cover 11, and a counter load-side cover 12.

The high-speed rotor 31 includes a shaft 21a, a rotor yoke 31b, and a plurality of inner pole magnets 31a. Both axial end portions of the shaft 21a extend from the rotor yoke 31b, and these both end portions are supported by bearings 13a and 13b. The plurality of inner pole magnets 31a are, for example, permanent magnets such as neodymium magnets, are arranged in the circumferential direction such that the polarity directions are alternately different, and are attached to an outer peripheral surface of the rotor yoke 31b. In addition, the plurality of inner pole magnets 31a may be integrated in a ring shape or may be individually divided.

The low-speed rotor 32 has a stepped configuration in which the counter load side is hollow in the present embodiment, and is disposed concentrically with the high-speed rotor 31. The low-speed rotor 32 includes a plurality of magnetic pole pieces (pole pieces) 32a disposed on an outer diameter side of the inner pole magnets 31a.

The magnetic pole piece 32a is made of a laminated steel sheet. The plurality of magnetic pole pieces 32a are disposed at predetermined intervals in the circumferential direction. The number of magnetic pole pieces 32a is the number of outer pole pairs (the number of pole pairs of the outer pole magnets 33) ± the number of inner pole pairs (the number of pole pairs of the inner pole magnets 31a) and is typically the number of outer pole pairs + the number of inner pole pairs. Two magnetic pole pieces 32a adjacent to each other in the circumferential direction may be connected by a thin connection portion or may be connected via a non-magnetic body.

The low-speed rotor 32 further includes the shaft member 32b located on the load side with respect to the magnetic pole pieces 32a. The shaft member 32b includes a conductive portion 32b1 and a non-conductive portion 32b2, and the conductive portion 32b1 is connected to the plurality of magnetic pole pieces 32a via the non-conductive portion 32b2. The conductive portion 32b1 is a conductor having no magnetic properties (ferromagnetic properties) such as stainless steel, aluminum, titanium, and copper, but may be a conductor having magnetic properties (ferromagnetic properties) such as steel-based conductors. The non-conductive portion 32b2 is made of a material having no magnetic and conductive properties (a non-magnetic body and an insulating body). The non-conductive portion 32b2 may be made of a resin.

The low-speed rotor 32 further includes an extension portion 32c extending from the magnetic pole piece 32a to the counter load side, and a ring member 32g mounted on an outer peripheral portion of the extension portion 32c. The ring member 32g is a conductor having no magnetic properties (ferromagnetic properties) such as stainless steel, aluminum, titanium, and copper, but may be a conductor having magnetic properties (ferromagnetic properties) such as steel-based conductors. The extension portion 32c is made of a material having no magnetic and conductive properties (a non-magnetic body and an insulating body). The extension portion 32c may be made of a resin.

The conductive portion 32b1 and the non-conductive portion 32b2 of the shaft member 32b and the ring member 32g have a cross-sectional shape in Fig. 1 continuously formed over the entire circumference in the circumferential direction, but may include notches in some portions in the circumferential direction.

With such a configuration, the shaft member 32b (the conductive portion 32b1 and the non-conductive portion 32b2) of the low-speed rotor 32, the plurality of magnetic pole pieces 32a, the extension portion 32c on the counter load side, and the ring member 32g are integrated, and the low-speed rotor 32 rotates integrally. A part of the shaft member 32b on the load side is exposed from the load-side cover 11 to the outside and is connected to a driven member (not shown).

The plurality of outer pole magnets 33 are concentrically disposed on an outer diameter side of the plurality of magnetic pole pieces 32a with a predetermined gap. The plurality of outer pole magnets 33 may be permanent magnets such as neodymium magnets or may be electromagnets. The plurality of outer pole magnets 33 have a larger number of poles than that of the plurality of inner pole magnets 31a. The plurality of outer pole magnets 33 are arranged in the circumferential direction such that the polarity directions are alternately different, and are attached to an inner peripheral surface of the casing 10 via a yoke portion 33a (not shown in Fig. 2). The plurality of outer pole magnets 33 function as a stator. The plurality of outer pole magnets 33 may be integrated in a ring shape or may be individually divided.

The axial length of the plurality of outer pole magnets 33, the axial length of the plurality of magnetic pole pieces 32a, and the axial length of the plurality of inner pole magnets 31a substantially coincide with each other, and the plurality of outer pole magnets 33, the plurality of magnetic pole pieces 32a, and the plurality of inner pole magnets 31a are disposed to substantially overlap each other when viewed in the radial direction.

The casing 10 covers the radially outward side of the plurality of outer pole magnets 33, the plurality of magnetic pole pieces 32a, and the plurality of inner pole magnets 31a. The load-side cover 11 is connected to the casing 10 and covers the load side of the plurality of outer pole magnets 33, the plurality of magnetic pole pieces 32a, and the plurality of inner pole magnets 31a. The counter load-side cover 12 is connected to the casing 10 and covers the counter load side of the plurality of outer pole magnets 33, the plurality of magnetic pole pieces 32a, and the plurality of inner pole magnets 31a.

The magnetic modulation gear 30 further includes the bearings 13a and 13b that support the high-speed rotor 31 to be rotatable, and bearings 13a, 13c, and 13d that support the low-speed rotor 32 to be rotatable. The bearings 13a to 13d are ball bearings, but various types of bearings such as roller bearings and tapered roller bearings may be applied.

The bearing 13a is fitted between the low-speed rotor 32 and the high-speed rotor 31 and supports the high-speed rotor 31 to be rotatable with respect to the low-speed rotor 32. Alternatively, the bearing 13a supports the low-speed rotor 32 to be rotatable with respect to the high-speed rotor 31. The bearing 13b is fitted between the counter load-side cover 12 and the high-speed rotor 31 (the shaft 21a thereof). The bearing 13c is fitted between the load-side cover 11 and the low-speed rotor 32 (the shaft member 32b thereof). The bearing 13d is fitted between the casing 10 and the low-speed rotor 32 (the ring member 32g thereof).

Each of the bearings 13a to 13d includes an outer ring, an inner ring, and a rolling element. The material of the outer ring, the inner ring, and the rolling element is steel or the like and has conductive and magnetic properties (ferromagnetic properties).

### <Operation of Magnetic Modulation Gear>

The magnetic modulation gear 30 is capable of performing a deceleration operation of decelerating a rotating motion input to the high-speed rotor 31 and outputting the rotating motion from the low-speed rotor 32, and an acceleration operation of accelerating the rotating motion input to the low-speed rotor 32 and outputting the rotating motion from the high-speed rotor 31.

In the deceleration operation, in a case where the rotating motion is input from the outside to the high-speed rotor 31, the plurality of inner pole magnets 31a provided in the high-speed rotor 31 rotate about the center axis Ax. Then, the rotating magnetic flux of the inner pole magnets 31a passes through the plurality of magnetic pole pieces 32a, thereby being modulated into a spatial magnetic flux including a waveform component having the same wave number as the number of pole pairs of the outer pole magnets 33, on the radially outward side of the plurality of magnetic pole pieces 32a (in a gap between the magnetic pole pieces 32a and the outer pole magnets 33). Then, due to the interaction between the spatial magnetic flux and the magnetic flux of the outer pole magnets 33, rotation torque is transmitted to the low-speed rotor 32 including the plurality of magnetic pole pieces 32a, and the low-speed rotor 32 rotates at a lower rotation speed than the high-speed rotor 31. The gear ratio (reduction ratio) in this case is (the number of magnetic pole pieces 32a/the number of pole pairs of the inner pole magnets 31a).

In the acceleration operation, in a case where the rotating motion is input from the outside to the low-speed rotor 32, the plurality of magnetic pole pieces 32a of the low-speed rotor 32 rotate about the center axis Ax while drawing in the magnetic flux of the plurality of outer pole magnets 33. Then, the magnetic flux of the outer pole magnets 33 is modulated into a spatial magnetic flux including a waveform component having the same wave number as the number of pole pairs of the inner pole magnets 31a, on the radially inward side of the plurality of magnetic pole pieces 32a (in a gap between the magnetic pole pieces 32a and the inner pole magnets 31a). Then, due to the interaction between the spatial magnetic flux and the magnetic flux of the inner pole magnets 31a, rotation torque is transmitted to the high-speed rotor 31 including the plurality of inner pole magnets 31a, and the high-speed rotor 31 rotates at a higher rotation speed than the low-speed rotor 32. The gear ratio (speed increasing ratio) in this case is (the number of pole pairs of the inner pole magnets 31a/the number of magnetic pole pieces 32a).

In Fig. 1, a structure in which the outer pole magnets 33 are fixed is shown. However, a configuration may be employed in which the plurality of outer pole magnets 33 are rotatably supported, and the decelerated rotating motion is output via the plurality of outer pole magnets 33, while the low-speed rotor 32 including the plurality of magnetic pole pieces 32a is fixed. Even in this case, the low-speed rotor 32 is configured to rotate relative to the plurality of outer pole magnets 33 and to further rotate relative to the high-speed rotor 31.

### <Characteristic Change Caused by Conductor Disposition>

Subsequently, a change in torque and efficiency of the magnetic modulation gear 30 in a case where a certain conductor 51 having no magnetic properties is disposed near the magnetic pole pieces 32a will be described.

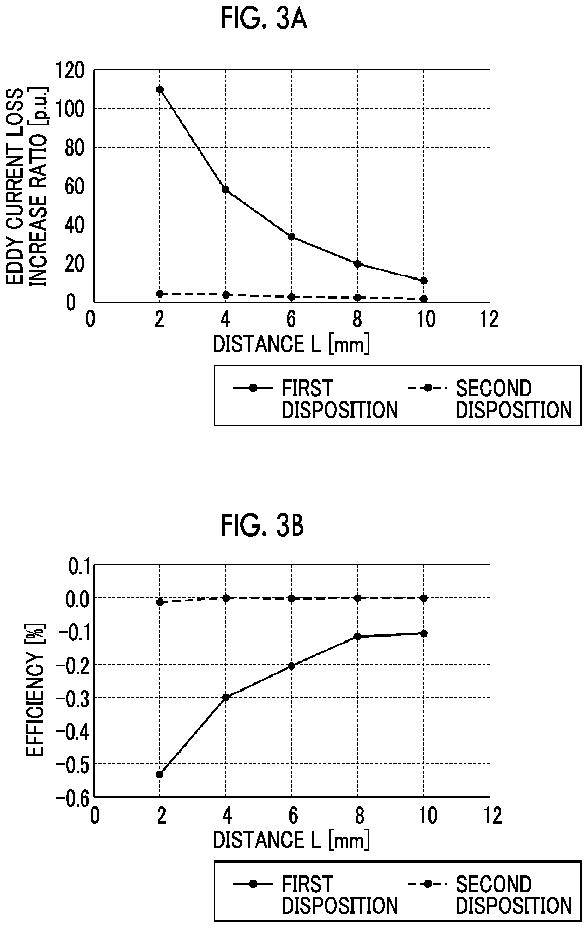

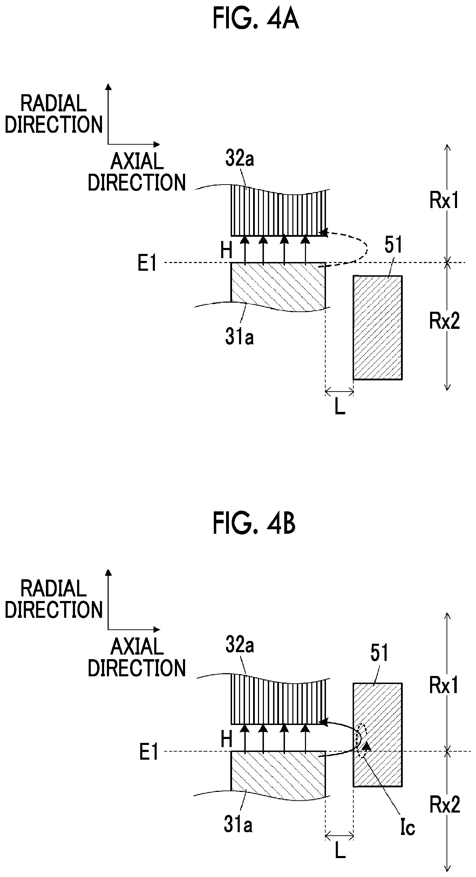

Figs. 3A and 3B are graphs showing changes in characteristics due to the disposition of the conductor, Fig. 3A shows eddy current loss characteristics, and Fig. 3B shows efficiency characteristics. Figs. 4A and 4B are diagrams showing analysis conditions of characteristics and show first disposition and second disposition of the conductor 51, respectively. In the graphs of Figs. 3A and 3B, the graph line of the first disposition and the graph line of the second disposition show the characteristics when the radial dispositions of the conductor 51 are respectively set to the dispositions of Figs. 4A and 4B and an axial distance L is changed. The eddy current loss increase ratio is represented by the per_unit method, using a magnification when the loss in a case where the conductor 51 is in the second disposition at the distance L = 10 mm is set as a reference (= 1). The distance L indicates an axial distance between the magnetic pole piece 32a and the conductor 51.

Figs. 4A and 4B show partial cross-sections (above the center axis Ax) obtained by cutting the inner pole magnet 31a, the magnetic pole piece 32a, and the certain conductor 51 with a vertical plane including the center axis Ax. A magnetic flux H passes between the inner pole magnet 31a and the magnetic pole piece 32a. In the analysis, an annular aluminum with the center axis Ax as the center is applied as the conductor 51 having no magnetic properties.

In a case where the conductor 51 is disposed in the vicinity of the inner pole magnet 31a and the magnetic pole piece 32a, the magnetic flux leaking from between the inner pole magnet 31a and the magnetic pole piece 32a may enter the conductor 51 depending on the disposition thereof. Then, a large amount of magnetic flux may enter the conductor 51, and the conductor 51 may be displaced (rotated), so that an eddy current Ic (Fig. 4B) may occur in the conductor 51, resulting in the occurrence of a loss. Then, the loss leads to a decrease in transmission torque density and efficiency of the magnetic modulation gear 30.

As a result of the analysis, it is shown that, in a case where the conductor 51 overlaps regions Rx1 and Rx2 and is close to the magnetic pole piece 32a in the axial direction, the loss due to the eddy current Ic increases, and the torque and the efficiency of the magnetic modulation gear 30 significantly decrease. Further, it is shown that, in a case where the conductor 51 is disposed within the region Rx2, an increase in loss caused by the eddy current is suppressed, and the decrease in torque and efficiency of the magnetic modulation gear 30 is suppressed, even when the conductor 51 and the magnetic pole piece 32a are close to each other in the axial direction. In the present specification, when it is described that "an object A is disposed within a region B", it means that the object A is disposed without protruding from the region B.

As shown in Figs. 4A and 4B, the region Rx1 corresponds to a region from an outer peripheral end E1 of the inner pole magnet 31a to the inner peripheral end of the outer pole magnet 33 in the radial direction. The region Rx2 corresponds to a radially inward region of the outer peripheral end E1 of the inner pole magnet 31a.

The characteristics as shown in the graphs of Figs. 3A and 3B similarly appear even in a case where the conductor 51 is located near the outer pole magnet 33 and the magnetic pole piece 32a. That is, in a case where the conductor 51 overlaps the region Rx1 and a radially outward region of the inner peripheral end of the outer pole magnet 33 and is close to the magnetic pole piece 32a in the axial direction, the loss due to the eddy current Ic increases, and the torque and the efficiency significantly decrease. In addition, in a case where the conductor 51 is disposed within the radially outward region of the inner peripheral end of the outer pole magnet 33, the decrease in torque and efficiency is suppressed even when the conductor 51 and the magnetic pole piece 32a are close to each other in the axial direction.

In a case where the conductor 51 has magnetic properties (ferromagnetic properties) such as being made of steel, the conductor 51 draws in the fluctuating magnetic flux, so that the gap magnetic flux density between the magnetic pole piece 32a and the inner pole magnet 31a (or the outer pole magnet 33) decreases, and the transmission torque density and the efficiency of the magnetic modulation gear 30 further decrease. Further, iron losses (eddy current loss and hysteresis loss) caused by a change in magnetic flux in the conductor 51 having magnetic properties occur, and the transmission torque density and the efficiency of the magnetic modulation gear 30 further decrease. Here, a configuration is assumed in which the conductor 51 disposed near the magnetic pole piece 32a is a non-magnetic body and the main losses are losses due to the eddy current Ic.

In view of the above characteristics, the magnetic modulation gear 30 of the present embodiment has the following conductor disposition structures 1 to 3 in order to suppress the decrease in torque and efficiency.

### <Conductor Disposition Structure 1>

As shown in Fig. 1, in the magnetic modulation gear 30, no conductor is provided in a region R1a. In other words, a component having conductive properties is disposed outside the region R1a. The magnetic modulation gear 30 may have a configuration in which no conductor is provided in a region R1. In other words, the component having conductive properties may be regarded as being disposed outside the region R1a.

The region R1a corresponds to a region between the inner peripheral ends of the plurality of outer pole magnets 33 and the outer peripheral ends of the plurality of inner pole magnets 31a in the radial direction and having a distance of X mm from the magnetic pole pieces 32a in the axial direction. X mm is preferably 8 mm and more preferably 3 mm.

The region R1 corresponds to a region between the inner peripheral ends of the plurality of outer pole magnets 33 and the outer peripheral ends of the plurality of inner pole magnets 31a in the radial direction, on the inner side of the member (the casing 10, the load-side cover 11, and the counter load-side cover 12) that cover the outer side of the magnetic modulation gear 30.

The above conductor or the component having conductive properties is, for example, a component using a conductor having no magnetic properties such as stainless steel, aluminum, titanium, or copper as a material, but may be a component using a conductor having magnetic properties (ferromagnetic properties) such as iron as a material. The component corresponds to the conductive portion 32b1 of the shaft member 32b, the ring member 32g, a sensor including a conductor, a stay for a sensor, a fastening member such as a bolt, or the like. In addition, the bearings 13a to 13d may be provided in the component.

With such a conductor disposition structure 1, it is possible to suppress a situation in which a magnetic flux leaking from between the outer pole magnet 33, the magnetic pole piece 32a, and the inner pole magnet 31a enters the component having conductive properties and a loss caused by an eddy current occurs.

### <Conductor Disposition Structure 2>

The conductive portion 32b1 of the shaft member 32b is connected to the magnetic pole pieces 32a via the non-conductive portion 32b2. The connection portion between the conductive portion 32b1 and the non-conductive portion 32b2 is disposed not to overlap the region R1 or the region R1a. In other words, the conductive portion 32b1 is disposed within a region that matches a region radially outward of the inner peripheral ends of the plurality of outer pole magnets 33, a region radially inward of the outer peripheral ends of the plurality of inner pole magnets 31a, and a region having an axial distance of X mm or more from the magnetic pole pieces 32a.

With such a configuration, it is possible to suppress a situation in which a magnetic flux leaking from between the outer pole magnet 33, the magnetic pole piece 32a, and the inner pole magnet 31a enters the conductive portion 32b1 of the shaft member 32b and an eddy current is generated to cause a loss.

### <Conductor Disposition Structure 3>

A component having conductive properties (for example, the ring member 32g), which is connected to the low-speed rotor 32, is disposed outside the region R1 or the region R1a. In other words, the above component (for example, the ring member 32g) is disposed within a region that matches a region radially outward of the inner peripheral ends of the plurality of outer pole magnets 33, a region radially inward of the outer peripheral ends of the plurality of inner pole magnets 31a, and a region having an axial distance of X mm or more from the magnetic pole pieces 32a.

With such a configuration, it is possible to suppress a situation in which a magnetic flux leaking from between the outer pole magnet 33, the magnetic pole piece 32a, and the inner pole magnet 31a enters the component having conductive properties and an eddy current is generated to cause a loss.

### <Gear Motor>

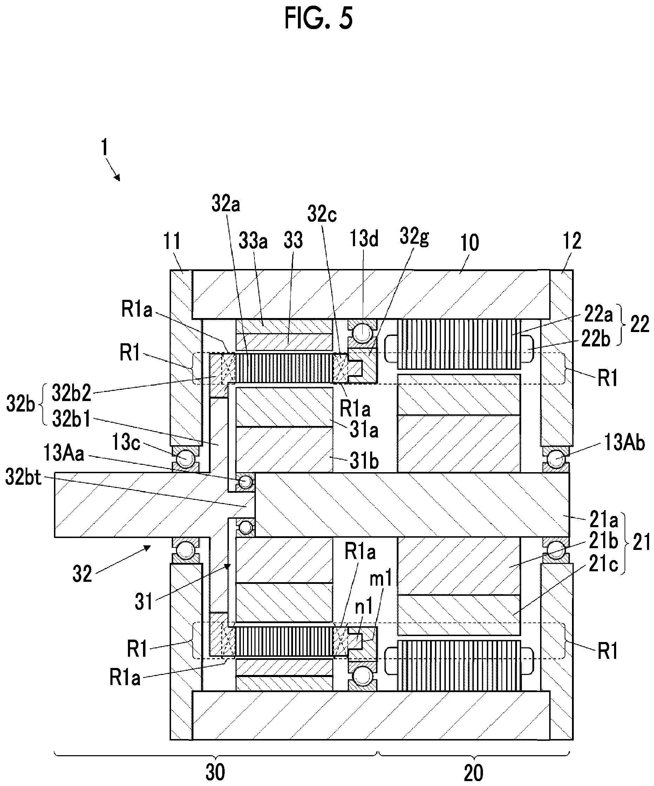

Fig. 5 is a cross-sectional view showing a gear motor according to the embodiment of the present invention. A gear motor 1 of the present embodiment includes a motor (electric motor) 20 that outputs rotational power, the magnetic modulation gear 30 that receives the rotational power of the motor 20, the casing 10 that accommodates the motor 20 and the magnetic modulation gear 30, the load-side cover 11, and the counter load-side cover 12.

The motor 20 includes a motor rotor 21 and a motor stator 22. The magnetic modulation gear 30 includes the high-speed rotor 31, the low-speed rotor 32, and the plurality of outer pole magnets 33, as described above. A rotation axis of the motor 20 and a rotation axis of the magnetic modulation gear 30 overlap each other on the center axis Ax. The motor 20 and the magnetic modulation gear 30 are disposed side by side in the axial direction.

The motor rotor 21 includes the shaft 21a, a rotor yoke 21b, and a rotor magnet 21c. The rotor yoke 21b is made of a magnetic body and is fixed to an outer peripheral surface of the shaft 21a. The rotor magnet 21c is, for example, a permanent magnet such as a neodymium magnet, and a plurality of the rotor magnets 21c corresponding to a predetermined number of pole pairs are attached to a portion of an outer peripheral surface of the rotor yoke 21b, which is located on the inner diameter side of the motor stator 22.

The motor stator 22 is configured by winding a coil 22b around a stator core 22a made of a laminated steel sheet. The motor stator 22 is concentrically disposed on an outer diameter side of the motor rotor 21 and is held in the casing 10 in a state in which the stator core 22a is fitted inside the casing 10.

The magnetic modulation gear 30 is configured substantially the same as the embodiment of Fig. 1 except that a part of the bearing structure is different. In the gear motor 1, the shaft 21a of the magnetic modulation gear 30 and the shaft 21a of the motor rotor 21 are common to each other and extend in the axial direction from the motor 20 over the magnetic modulation gear 30. The ring member 32g includes an annular fitting groove m1 that is recessed in the axial direction, and the extension portion 32c includes an annular protrusion n1 that corresponds to the fitting groove m1. Then, the protrusion n1 is fitted to the fitting groove m1, so that the ring member 32g and the extension portion 32c are joined to each other.

The gear motor 1 further includes bearings 13Aa and 13Ab that rotatably support the high-speed rotor 31 of the magnetic modulation gear 30 and the motor rotor 21, and the bearings 13Aa, 13c, and 13d that rotatably support the low-speed rotor 32 of the magnetic modulation gear 30. The bearings 13Aa, 13Ab, 13c, and 13d are ball bearings, but various types of bearings such as roller bearings and tapered roller bearings may be applied.

The bearing 13Aa is fitted between the shaft member 32b of the low-speed rotor 32 and the high-speed rotor 31 and supports the low-speed rotor 32 to be rotatable with respect to the high-speed rotor 31 while supporting the high-speed rotor 31 to be rotatable with respect to the low-speed rotor 32. More specifically, the shaft member 32b includes a protrusion portion 32bt that protrudes to the counter load side, while a recessed portion that is open in the axial direction is provided in an end portion of the high-speed rotor 31 on the load side. Further, the protrusion portion 32bt extends to the inside of the recessed portion of the high-speed rotor 31, and the bearing 13Aa is fitted between an outer peripheral surface of the protrusion portion 32bt and the inner peripheral surface of the recessed portion.

The bearing 13Ab is fitted between the shaft 21a and the counter load-side cover 12 connected to the casing 10 and rotatably supports the shaft 21a with respect to the casing 10.

The bearing 13c is fitted between the load-side cover 11 connected to the casing 10 and the shaft member 32b of the low-speed rotor 32 and rotatably supports the shaft member 32b with respect to the casing 10.

The bearing 13d is fitted between the casing 10 and the ring member 32g of the low-speed rotor 32 and rotatably supports the low-speed rotor 32 on the counter load side with respect to the casing 10.

### <Operation of Gear Motor>

In the gear motor 1, the motor 20 is driven to output the rotational power to the motor rotor 21 and input the rotational power to the magnetic modulation gear 30, and the rotating motion is decelerated by the operation of the above-described magnetic modulation gear 30 and is output via the low-speed rotor 32.

### <Conductor Disposition of Gear Motor>

Also in the gear motor 1, the conductive portion 32b1 of the shaft member 32b of the low-speed rotor 32 is connected to the magnetic pole pieces 32a via the non-conductive portion 32b2, so that the conductive portion 32b1 of the shaft member 32b is disposed outside the region R1 or the region R1a.

Further, the ring member 32g having conductive properties is fitted to the extension portion 32c having no conductive properties, so that the ring member 32g is disposed outside the region R1 or the region R1a.

Furthermore, the bearings 13Aa, 13Ab, 13c, and 13d and the rotor yoke 21b and the motor stator 22 of the motor 20 include conductors, but are disposed outside the region R1a.

Therefore, in the gear motor 1, a configuration is also achieved in which no conductor is provided in the region R1.

With such a configuration, it is possible to suppress a situation in which a magnetic flux leaking from between the outer pole magnet 33, the magnetic pole piece 32a, and the inner pole magnet 31a enters the conductor and an eddy current is generated to cause a loss.

### (Modification Example)

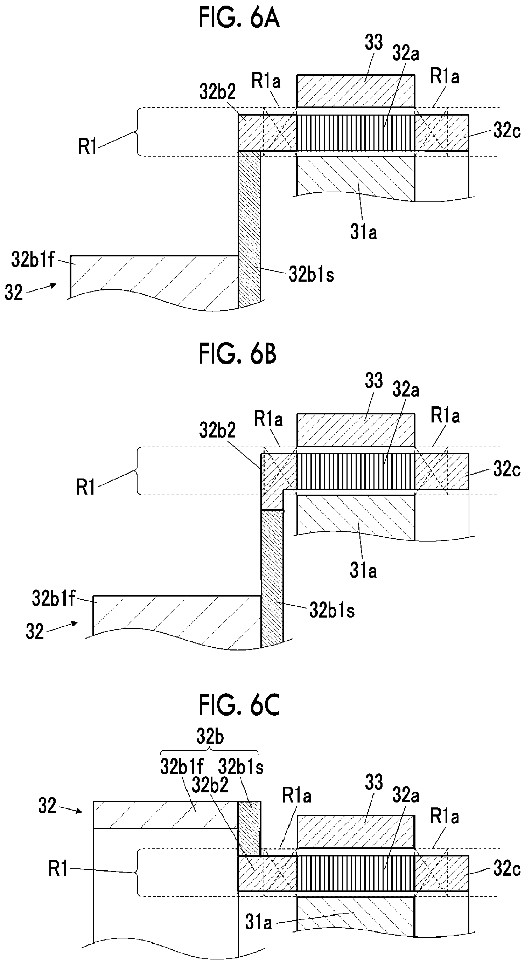

Subsequently, Modification Examples 1 to 8 will be described with reference to Figs. 6A to 8B. In Figs. 6A to 8B, the outer pole magnet 33, the low-speed rotor 32, and the inner pole magnet 31a are mainly shown, and several other components are not shown. The magnetic modulation gear of Modification Examples 1 to 8 shown in Figs. 6A to 8B may have a configuration in which other components are provided in the same manner as the magnetic modulation gear 30 of Fig. 1 or the gear motor 1 of Fig. 5.

### <Modification Examples 1 to 3>

Figs. 6A to 6C are views showing modification examples of the connection portion of the shaft member, Fig. 6A shows Modification Example 1, Fig. 6B shows Modification Example 2, and Fig. 6C shows Modification Example 3. In Modification Examples 1 to 3, the shaft member 32b includes conductive portions 32b1f and 32b1s and the non-conductive portion 32b2, in the same manner as in the embodiment of Fig. 1. Meanwhile, the conductive portions 32b1f and 32b1s include, for example, the conductive portion 32b1f having magnetic properties and made of a material such as steel, and the non-magnetic conductive portion 32b1s made of a material such as stainless steel.

Also in Modification Examples 1 to 3, the conductive portions 32b1f and 32b1s of the shaft member 32b are connected to the magnetic pole pieces 32a via the non-conductive portion 32b2. Further, the non-magnetic conductive portion 32b1s is interposed between the conductive portion 32b1f having magnetic properties and the non-conductive portion 32b2. The conductive portion 32b1f having magnetic properties may configure a shaft portion of the shaft member 32b, and the non-magnetic conductive portion 32b1s may configure a flange portion of the shaft member.

Modification Example 1 (Fig. 6A) is an example in which the non-conductive portion 32b2 of the shaft member 32b is made longer in the axial direction, and the connection portion between the conductive portion 32b1s and the non-conductive portion 32b2 is spaced apart from the magnetic pole pieces 32a in the axial direction. With such a configuration, the conductive portion 32b1s of the shaft member 32b overlaps the region R1, but can be disposed away from the region R1a where a relatively significant loss occurs.

According to Modification Example 1, the conductive portion 32b1s of the shaft member 32b is disposed outside the region R1a, so that it is possible to suppress the decrease in torque and efficiency of the magnetic modulation gear caused by the eddy current. Further, it is possible to obtain effects of simplifying the shape of the non-conductive portion 32b2 and easily forming the non-conductive portion 32b2.

Modification Example 2 (Fig. 6B) is an example in which at least a part of the non-conductive portion 32b2 is shaped to project in the radial direction, and the conductive portion 32b1s is connected to the projecting portion. With such a configuration, the conductive portion 32b1s can be disposed outside the region R1.

According to Modification Example 2, the conductive portion 32b1s of the shaft member 32b is disposed outside the region R1, so that it is possible to suppress the decrease in torque and efficiency of the magnetic modulation gear caused by the eddy current. Further, the conductive portion 32b1s of the shaft member 32b can be brought close to the magnetic pole pieces 32a in the axial direction, and an effect of contributing to the axial compactness of the magnetic modulation gear can be obtained.

Modification Example 3 (Fig. 6C) is an example in which the maximum outer diameter of the shaft member 32b is larger than the outer diameter of the magnetic pole piece 32a, and the conductive portion 32b1s of the shaft member 32b is connected from the radially outer side of the non-conductive portion 32b2. Even in such a configuration, as shown in Fig. 6C, the non-conductive portion 32b2 is configured to be long in the axial direction, so that the connection portion between the conductive portion 32b1s and the non-conductive portion 32b2 can be separated from the magnetic pole pieces 32a in the axial direction. With this configuration, the conductive portion 32b1s can be disposed outside the region R1a, and the decrease in torque and efficiency of the magnetic modulation gear caused by the eddy current can be suppressed. Further, it is possible to obtain the effects of simplifying the shape of the non-conductive portion 32b2 and easily forming the non-conductive portion 32b2.

In addition, although not shown, at least a part of the non-conductive portion 32b2 may be shaped to project radially outward, and the conductive portion 32b1s may be connected to the projecting portion. With such a configuration, the conductive portion 32b1s can be disposed outside the region R1. According to this configuration, it is possible to bring the conductive portion 32b1s of the shaft member 32b close to the magnetic pole pieces 32a in the axial direction while suppressing the decrease in torque and efficiency of the magnetic modulation gear caused by the eddy current, so that it is possible to obtain the effect of contributing to the axial compactness of the magnetic modulation gear.

### <Modification Examples 4 to 6>

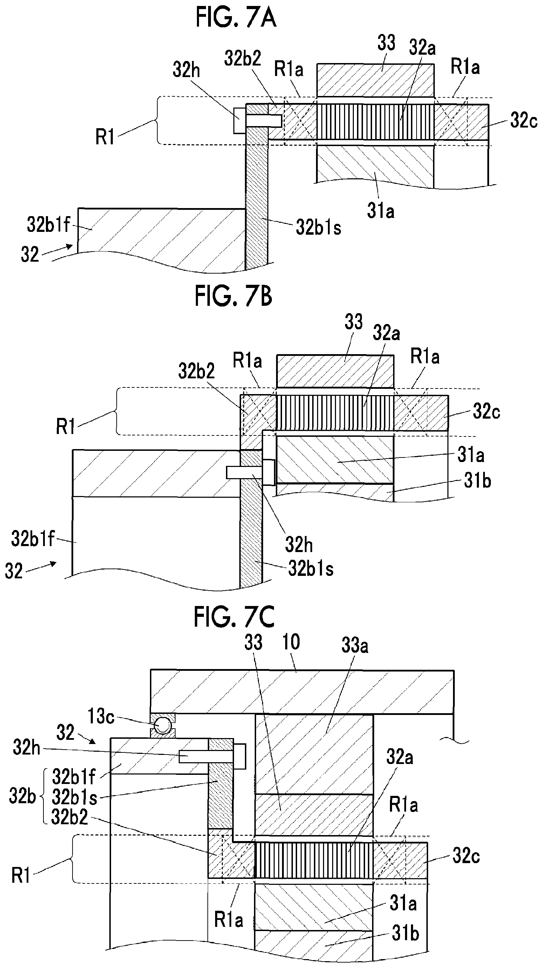

Figs. 7A to 7C are views showing modification examples of the connection structure of the shaft member, Fig. 7A shows Modification Example 4, Fig. 7B shows Modification Example 5, and Fig. 7C shows Modification Example 6. In Modification Examples 4 to 6, the conductive portion 32b1s and the non-conductive portion 32b2 of the shaft member 32b, or the two conductive portions 32b1f and 32b1s are connected to each other via a connection member 32h such as a bolt. The connection member 32h is made of a non-magnetic conductor such as stainless steel.

Modification Example 4 (Fig. 7A) is an example in which the conductive portion 32b1s is connected to an axial end portion of the non-conductive portion 32b2 via the connection member 32h. The non-conductive portion 32b2 is made longer in the axial direction, so that the connection member 32h is spaced apart from the magnetic pole pieces 32a in the axial direction. With such a configuration, the connection member 32h, which is a conductor, overlaps the region R1, but can be disposed to be separated from the region R1a where a relatively significant loss occurs.

According to Modification Example 4, the connection member 32h is disposed outside the region R1a, so that it is possible to suppress the decrease in torque and efficiency of the magnetic modulation gear caused by the eddy current. Further, it is possible to obtain effects of simplifying the shape of the non-conductive portion 32b2 and easily connecting the conductive portion 32b1s and the non-conductive portion 32b2.

Modification example 5 (Fig. 7B) is an example in which the conductive portion 32b1s configuring the flange portion is connected via the connection member 32h to an axial end portion of the conductive portion 32b1f configuring the shaft portion. The connection member 32h is disposed such that a head portion thereof is disposed on a side close to the magnetic pole pieces 32a and a screw portion thereof is disposed on a side far from the magnetic pole pieces 32a, in the axial direction. The connection portion between the two conductive portions 32b1s and 32b1f is significantly spaced apart radially inward from the magnetic pole pieces 32a, so that the connection member 32h, which is a conductor, can be disposed outside the regions R1a and R1.

According to Modification Example 5, the connection member 32h is disposed outside the regions R1a and R1, so that it is possible to suppress the decrease in torque and efficiency of the magnetic modulation gear caused by the eddy current. Further, the connection portion between the two conductive portions 32b1f and 32b1s of the shaft member 32b can be brought close to the magnetic pole pieces 32a in the axial direction, and the effect of contributing to the axial compactness of the magnetic modulation gear can be obtained.

Modification Example 6 (Fig. 7C) is an example in which the maximum outer diameter of the shaft member 32b is larger than the outer diameter of the magnetic pole piece 32a, and the conductive portion 32b1s is connected to the radially outer side of the non-conductive portion 32b2. Even in such a configuration, the conductive portion 32b1s configuring the flange portion is connected via the connection member 32h to the axial end portion of the conductive portion 32b1f configuring the shaft portion. The connection member 32h is disposed such that the head portion thereof is disposed on the side close to the magnetic pole pieces 32a and the screw portion thereof is disposed on the side far from the magnetic pole pieces 32a, in the axial direction. The connection portion between the two conductive portions 32b1s and 32b1f is significantly spaced apart radially outward from the magnetic pole pieces 32a, so that the connection member 32h, which is a conductor, can be disposed outside the regions R1a and R1.

According to Modification Example 6, the connection member 32h is disposed outside the regions R1a and R1, so that it is possible to suppress the decrease in torque and efficiency of the magnetic modulation gear caused by the eddy current. Further, the connection portion between the two conductive portions 32b1f and 32b1s of the shaft member 32b can be brought close to the magnetic pole pieces 32a in the axial direction, and the effect of contributing to the axial compactness of the magnetic modulation gear can be obtained.

### <Modification Examples 7 and 8>

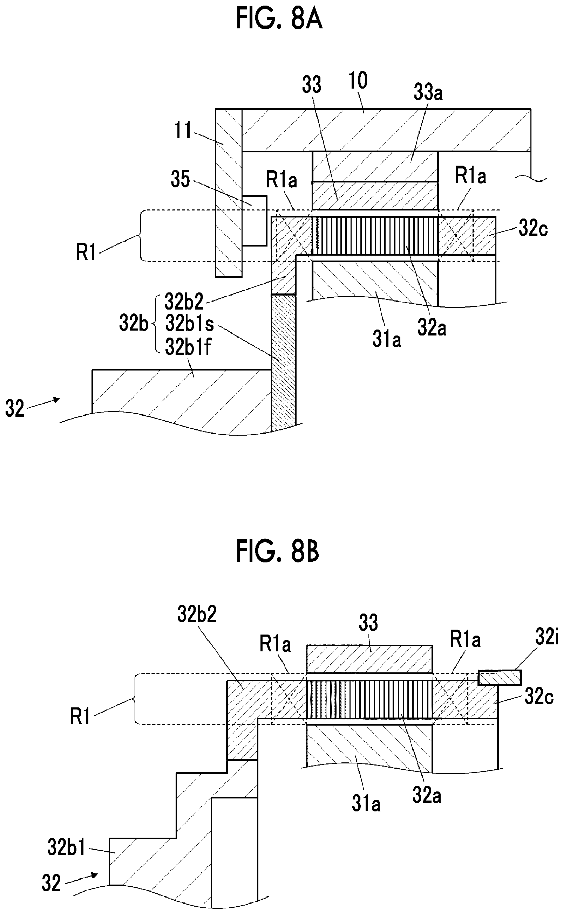

Figs. 8A and 8B are views showing modification examples in which other conductive components are provided, Fig. 8A shows Modification Example 7, and Fig. 8B shows Modification Example 8.

Modification Example 7 (Fig. 8A) is an example in which a sensor 35 including an electrical conductor is provided in the vicinity of the low-speed rotor 32. The sensor 35 is, for example, an encoder that detects rotation, but may be various sensors such as a temperature sensor. The sensor 35 is disposed to face the non-conductive portion 32b2 of the shaft member 32b, so that the sensor 35 can be disposed to face a portion of the shaft member 32b, which is displaced at the same speed as that of the magnetic pole pieces 32a, and can be spaced apart from the magnetic pole pieces 32a in the axial direction. With such a disposition, it is possible to address the request in a case where it is desired to perform any measurement for a location displaced at a speed equivalent to that of the magnetic pole pieces 32a, and the conductor portion of the sensor 35 can be disposed outside the region R1a. With such a disposition, it is possible to suppress the loss and the decrease in torque of the magnetic modulation gear caused by the eddy current. The sensor 35 may be disposed to overlap the region R1 while being out of the region R1a.

Modification Example 8 (Fig. 8B) is an example in which a plate member 32i, which is a conductor, is provided in the extension portion 32c. In Modification Example 8, the low-speed rotor 32 corresponds to an example of the rotor according to the present invention, and the plate member 32i corresponds to an example of the conductive member according to the present invention.

The plate member 32i may be members for various purposes such as a member for reinforcement or a nondetection member for electrically performing rotation detection. The plate member 32i may be a member fixed to the extension portion 32c in a partial range in the circumferential direction or may be an annular member located over the entire circumference in the circumferential direction. The plate member 32i can be spaced apart from the magnetic pole pieces 32a in the axial direction by being fixed to the extension portion 32c. With this configuration, the plate member 32i, which is a conductor, can be disposed to be out of the region R1a, and it is possible to suppress the loss and the decrease in torque of the magnetic modulation gear caused by the eddy current. The plate member may be disposed to overlap the region R1 while being out of the region R1a.

The embodiments of the present invention have been described above. However, the present invention is not limited to the embodiments described above. For example, in the above embodiments, the magnetic modulation gear 30 that decelerates or accelerates the rotating motion by rotating the low-speed rotor 32 and the high-speed rotor 31 has been described. However, a configuration may also be employed in which the plurality of magnetic pole pieces may be fixed, the plurality of inner pole magnets may be integrated with a high-speed shaft, and the plurality of outer pole magnets may be integrated with a low-speed shaft. Even in this case, in the configuration in which the plurality of magnetic pole pieces are integrated, the plurality of magnetic pole pieces rotate relative to the inner pole magnets and the outer pole magnets, so that the configuration can be regarded as a rotor including the plurality of magnetic pole pieces. In addition, the number of components that are conductors shown in the above embodiments can be variously changed. Further, in the above embodiments, a configuration has been described in which the shaft member integrated with the plurality of magnetic pole pieces protrudes to the load side, but the shaft member may be located on the counter load side. In addition, details shown in the embodiments can be appropriately changed without departing from the gist of the invention.

Further, the present invention can be suitably applied to various machines for general industrial applications based on features such as high efficiency, low maintenance, quietness (low noise), and cleanliness (oil-free). In particular, the present invention is highly useful for the following applications.
· Robot joint gear: a high safety and compliance function is provided due to features such as a torque limit function and low rigidity of the magnetic modulation gear.
· Power generation speed increaser: an undue load is not applied even during high loads such as strong winds in wind power generation because the torque limit function is provided. The usefulness of low maintenance is high.
· Vacuum device (semiconductor manufacturing device): use for magnet coupling application allows a deceleration function and a coupling function to be individually exhibited and eliminates the need for a reduction gear (or allows an input motor to be downsized), leading to the compactness of the device.
· Food machine: usefulness in terms of hygiene management is high due to features such as grease-free (oil-free), no generation of abrasion powder from shaft seals (oil seals), and easy disassembly of the shaft structure for internal cleaning.
· Office/home appliances: quietness in an indoor space can be secured due to features such as low vibration noise for non-contact power transmission.

### Industrial Applicability

The present invention can be used for a magnetic modulation gear and a gear motor.

### Reference Signs List

1 gear motor
10 casing
11 load-side cover
12 counter load-side cover
13a, 13b, 13Aa, 13Ab, 13c, 13d bearing
20 motor
21a shaft
21b rotor yoke
21c rotor magnet
22 motor stator
22a stator core
22b coil
30 magnetic modulation gear
31 high-speed rotor
31a inner pole magnet
31b rotor yoke
32 low-speed rotor (rotor)
32a magnetic pole piece
32b shaft member
32b1 conductive portion
32b1s non-magnetic conductive portion
32b1f conductive portion having magnetic properties
32b2 non-conductive portion
32c extension portion
32g ring member
32h connection member
32i plate member (conductive member)
33 outer pole magnet
33a yoke portion
35 sensor
R1, R1a region

## Claims

1. A magnetic modulation gear comprising:
a plurality of outer pole magnets that are arranged in a circumferential direction;
a plurality of magnetic pole pieces that are provided radially inward of the plurality of outer pole magnets and arranged in the circumferential direction; and
a plurality of inner pole magnets that are provided radially inward of the plurality of magnetic pole pieces and arranged in the circumferential direction,
wherein the magnetic modulation gear further includes a shaft member that is connected to the plurality of magnetic pole pieces,
the shaft member includes a non-conductive portion and a conductive portion, and
the conductive portion is connected to the plurality of magnetic pole pieces via the non-conductive portion.

2. The magnetic modulation gear according to claim 1, wherein a connection portion between the conductive portion and the non-conductive portion is located within a region radially outward of inner peripheral ends of the outer pole magnets or within a region radially inward of outer peripheral ends of the inner pole magnets.

3. The magnetic modulation gear according to claim 1,
wherein a connection portion between the conductive portion and the non-conductive portion is located within a region that matches a region radially outward of inner peripheral ends of the outer pole magnets, a region radially inward of outer peripheral ends of the inner pole magnets, and a region spaced apart from the magnetic pole pieces by 3 mm or more in an axial direction.

4. The magnetic modulation gear according to any one of claims 1 to 3, further comprising:
a connection member that connects the non-conductive portion and the conductive portion to each other, or a conductive member that is connected to a rotor integrated with the shaft member,
wherein the connection member or the conductive member is located within a region that matches a region radially outward of inner peripheral ends of the outer pole magnets, a region radially inward of outer peripheral ends of the inner pole magnets, and a region spaced apart from the magnetic pole pieces by 3 mm or more in an axial direction.

5. A magnetic modulation gear comprising:
a plurality of outer pole magnets that are arranged in a circumferential direction;
a plurality of magnetic pole pieces that are provided radially inward of the plurality of outer pole magnets and arranged in the circumferential direction; and
a plurality of inner pole magnets that are provided radially inward of the plurality of magnetic pole pieces and arranged in the circumferential direction,
wherein no conductor is provided in a region between inner peripheral ends of the plurality of outer pole magnets and outer peripheral ends of the plurality of inner pole magnets in a radial direction and having a distance of less than 3 mm from the magnetic pole pieces in an axial direction.

6. The magnetic modulation gear according to any one of claims 1 to 5,
wherein the conductive portion of the shaft member, the connection member, the conductive member, the conductor, or a plurality of the conductive portion, connection member, conductive member, and conductor are non-magnetic bodies.

7. A gear motor comprising:
an electric motor; and
the magnetic modulation gear according to any one of claims 1 to 6, which receives power from the electric motor.
